# EUROPÄISCHE PATENTANMELDUNG

(11) **EP 0 864 598 A2**
(43) Veröffentlichungstag der Anmeldung: **16.09.1998**
(21) Anmeldenummer: 98104000.9
(22) Anmeldetag: 06.03.1998
(51) Int. Cl.: C08G 65/30

(54) **Verfahren zur Behandlung von Polyetherpolyolen**

(30) Priorität: 13.03.1997 DE 19710443
(71) Anmelder: BASF AKTIENGESELLSCHAFT, 67056 Ludwigshafen (DE)
(72) Erfinder: Guettes, Bernd, 03238 Sallgast (DE); Hoeppner, Gerd, 01987 Schwarzheide (DE); Wetterling, Monika, 01968 Senftenberg (DE); Auer, Heinz, 68809 Neulussheim (DE); Bruhn, Jens, 67071 Ludwigshafen (DE); Dinsch, Stefan, 01993 Schipkau (DE); Winkler, Juergen, 01987 Schwarzheide (DE)

(57) **Zusammenfassung**

Gegenstand der Erfindung ist ein Verfahren zur Behandlung von Polyetherpolyolen, die auf übliche Weise durch basisch katalysierte Umsetzung von H-funktionellen Startsubstanzen mit Alkylenoxiden hergestellt wurden, das dadurch gekennzeichnet ist, daß die Behandlung eine Kombination aus einem thermisch-reaktiven Schritt bei einem pH-Wert von kleiner als 7 und einer Temperatur von größer als 60°C und einem thermisch-destillativen Schritt in einer Gegenstromkolonne unter Verwendung eines Reinigungsmittels ist.

Gegenstand der Erfindung ist weiterhin die Verwendung der erfindungsgemäß hergestellten Polyetherpolyole zur Herstellung von fogging- und geruchsarmen PUR-Schaumstoffen.

## Beschreibung

Die Erfindung betrifft ein Verfahren zur Behandlung von Polyetherpolyolen, die auf übliche Weise durch basisch katalysierte Umsetzung von H-funktionellen Startsubstanzen mit Alkylenoxiden hergestellt und vom Katalysator und gegebenenfalls von gebildeten Salzen gereinigt wurden, wobei diese Behandlung eine Kombination aus einem thermisch-reaktiven Schritt bei einem pH-Wert von kleiner als 7 und einer Temperatur von großer als 60°C und einem thermisch-destillativen Schritt in einer Gegenstromkolonne unter Verwendung eines Reinigungsmittels ist.

Die Herstellung von Polyetherpolyolen ist seit langem bekannt. Die Polyetherolsynthese nach der anionischen Polymerisation wird insbesondere unter Einsatz von Alkali- und Erdalkalihydroxiden, und bei Temperaturen von 60 bis 140°C und erhöhten Drücken durchgeführt. Nach der Synthese wird zur Entfernung des Katalysators mittels Säure, insbesondere Salz- und/oder Phosphorsäure, neutralisiert, zur Entfernung von Wasser und anderen leichtflüchtigen Bestandteilen destilliert, insbesondere unter Vakuum und bei Temperaturen von 80 bis 130°C, und abschließend werden die Salze entfernt.

Näheres hierzu kann dem Kunststoffhandbuch, Band VII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel, entnommen werden.

Bei diesem Herstellungsverfahren entstehen neben den Zielprodukten, den Polyetherpolyolen mit unterschiedlichen Molekulargewichten, eine Vielzahl von Nebenprodukten, die die Anwendung der Polyetherpolyole zur Herstellung von Polyurethanen (PUR) auf verschiedene Weise stören. Sie können den Schäumvorgang negativ beeinflussen, die wichtigsten physiko-mechanischen Schaumwerte, wie Härte oder Elastizität, verschlechtern und infolge geringer Flüchtigkeit zunächst im PUR verbleiben und nach und nach störenden Geruch und Fogging-Effekte verursachen.

Insbesondere für bestimmte Anwendungen des PUR-Weichschaumes im Möbelbereich und in der Textilbeschichtung ist der Geruch der PUR-Schäume problematisch. Die von den PUR-Katalysatoren und den PUR-Hilfs- und Zusatzstoffen ausgehenden Ursachen für die Geruchsproblematik werden durch Umstellung auf höhersiedende, schwerer flüchtige Substanzen mit niederen Dampfdrücken und Einsatz von einbaubaren Katalysatoren, z.B. des Spaceramintyps gemäß EP-A-0539819, beseitigt. Die von den Polyolen herrührenden und Geruch verursachenden Substanzen können, analog der Entfernung von cyclischen Ethern bzw. ungesättigten Polyolbestandteilen, wie im US-A-4251654 bzw. EP-A-0576132 beschrieben, durch Extraktion mit Wasser oder Glykolen entfernt werden. Damit wird aber nur eine sehr begrenzte Anzahl von leichtflüchtigen Substanzen entfernt, andere lagern sich bei diesen Bedingungen zu geruchsintensiven Substanzen erst um (Acetalbildung bzw. -spaltung). Die bei der üblichen Reinigungsoperation zur Katalysatorentfernung durchgeführte Destillation zur Wasserentfernung beseitigt, wie z.B. in DD-A-216248 beschrieben, zusätzlich auch leichtflüchtige Bestandteile. Bei der Neutralisation und nachgeschalteten Wasserentfernung kommt es zu laufenden pH-Wert-Veränderungen und damit zu einer Vielzahl von Umlagerungen der Geruchsbildner (Aldehyde, Dioxane) oder, wie in WO-A-9318083 beschrieben und beabsichtigt, sogar zu Verschiebungen der Molekulargewichtszusammensetzung.

Bei der in der eigenen Patentanmeldung Nr. 19629160.7 dargestellten kombinierten thermisch-destillativen Behandlung von Polyetherpolyolen erfolgt zwar eine Entfernung wichtiger geruchsintensiver Stoffe, aber eine Reihe von Nebenprodukten werden in einer Gleichgewichtsreaktion ständig nachgebildet. Zu deren Entfernung reicht eine rein physikalische Behandlung nicht aus. Ähnlich arbeiten Destillationsverfahren, wie z. B. nach EP-A-0579988, zur Herstellung von foggingarmen Polyesterpolyolen. Mit derart rein destillativen Verfahren sind bestimmte Nebenprodukte der Polyetherpolyolherstellung nicht ausreichend zu entfernen, zumal man bei diesen Polyolen im Temperaturbereich unterhalb 150°C bleiben muß. Hohe Abreicherungsraten von > 95 % bei qualitätsbeeinflussenden Nebenprodukten in Polyolen sind bisher nur in aufwendigen Apparaten erreichbar. Dies führt zu hohen Investitionskosten aufgrund der eingesetzten teuren Apparaturen, wie Kurzwegverdampfern oder Extrudern. Ein besseres Abreicherungsergebnis ist auch bei sehr langen Verweilzeiten in einfachen Apparaten, wie z. B. Rührkesseln, möglich. Dies führt jedoch zu geringen Ausbeuten und zu unvertretbaren Produktschädigungen und - verfärbungen.

Der Erfindung lag daher die Aufgabe zugrunde, ein Verfahren zur Nachbehandlung von Polyetherpolyolen aus der üblichen basisch katalysierten Umsetzung von H-funktionellen Startsubstanzen mit Alkylenoxiden und nachfolgender Reinigung der Rohpolyetherpolyole zur Katalysatorentfernung zu entwickeln, das hohe Abreicherungsraten der qualitätsbeeinflussenden Nebenprodukte und hohe Ausbeuten bei vollständiger Vermeidung von Produktverfärbungen und Produktschädigungen mit reduziertem apparativen Aufwand ermöglicht.

Diese Aufgabe wurde erfindungsgemäß dadurch gelöst, daß die Polyetherpolyole einer Behandlung unterzogen werden, die eine Kombination aus einem thermisch-reaktiven Schritt bei einem pH-Wert von kleiner als 7 und einer Temperatur von größer als 60°C und einem thermisch-destillativen Schritt in einer Gegenstromkolonne unter Verwendung eines Reinigungsmittels ist.

Gegenstand der Erfindung ist somit ein Verfahren zur Behandlung von Polyetherpolyolen, die auf übliche Weise durch basisch katalysierte Umsetzung von H-funktionellen Startsubstanzen mit Alkylenoxiden hergestellt wurden, das dadurch gekennzeichnet ist, daß die Behandlung eine Kombination aus einem thermisch-reaktiven Schritt bei einem pH-Wert von kleiner als 7 und einer Temperatur von größer als 60°C und einem thermisch-destillativen Schritt in einer Gegenstromkolonne unter Verwendung eines Reinigungsmittels ist.

Gegenstand der Erfindung ist weiterhin die Verwendung der erfindungsgemäß hergestellten Polyetherpolyole zur Herstellung von fogging- und geruchsarmen PUR-Schaumstoffen.

Das erfindungsgemäße Verfahren ist zur Behandlung aller Polyetherpolyole, die durch basisch katalysierte Anlagerung von Alkylenoxiden an H-funktionelle Startsubstanzen hergestellt wurden, anwendbar.

Die Herstellung derartiger Produkte erfolgt nach den aus dem Stand der Technik bekannten Verfahren. Dabei wird die H-, insbesondere OH- und/oder NH- bzw. NH₂-funktionelle Startsubstanz mit dem basischen Katalysator in einer Menge von 0,05 bis 1 Gew.-% vermischt, das dabei entstehende Wasser entfernt und danach das niedere Alkylenoxid, insbesondere Ethylen- und/oder Propylenoxid, zudosiert und zur Reaktion gebracht.

Als OH-funktionelle Startsubstanzen kommen zumeist mehrfunktionelle, insbesondere zwei- und/oder dreifunktionelle, Verbindungen, wie Glykole, beispielsweise Ethylenglykol und Propylenglykol, Glycerin und Trimethylolpropan, aber auch höherfunktionelle Alkohole und Zuckeralkohole, wie Glucose oder Saccharide, in Frage. Besonders vorteilhaft ist der Einsatz von Glyzerin und/oder Trimethylolpropan einzeln oder im Kombination mit Anteilen an Glykolen.

Als NH- oder NH₂-funktionelle Verbindungen können sowohl aliphatische als auch aromatische ein- oder mehrfunktionelle primäre oder sekundäre Amine eingesetzt werden. Auch Wasser kann als Startsubstanz eingesetzt werden. Häufig werden Gemische der genannten Verbindungen als Starter eingesetzt.

Insbesondere zur Umsetzung von bei Reaktionstemperatur hochviskosen oder festen Startsubstanzen werden flüssige Coinitiatoren genutzt, um einen homogenen Reaktionsstart zu ermöglichen. Das gilt für Zucker, wie Sorbit oder Saccharose, aber auch für aromatische Amine, wie Toluylendiamin oder Methyldiphenyldiamin und deren Homologe. Als Coinitiatoren dienen hierbei insbesondere Glykole, Glyzerin oder auch Wasser.

Nach Zugabe des alkalischen Katalysators und gegebenenfalls der Entfernung des entstehenden Wassers erfolgt die Dosierung der Alkylenoxide. Aus Sicherheitsgründen wird das Reaktionsgefäß vorher mit Inertgas, insbesondere Stickstoff, inertisiert.

Als niedere Alkylenoxide werden insbesondere Ethylenoxid (EO), Propylenoxid (PO) und/oder Butylenoxid (BO), vorzugsweise EO und 1,2-PO, eingesetzt.

Als Katalysatoren werden basische Verbindungen, insbesondere Alkali- bzw. Erdalkalihydroxide und/oder Amine, verwendet. Die Alkylenoxide werden einzeln blockweise und/oder als statistisches Gemisch angelagert.

Die Umsetzung erfolgt unter üblichen Reaktionsbedingungen, insbesondere bei Temperaturen von 60 bis 140°C und druckloser Fahrweise oder einem Druck bis 1,0 MPa.

Das so hergestellte Polyetherpolyol wird anschließend auf übliche Art und Weise, beispielsweise durch Ionenaustausch-, Sorptions- oder Säureneutralisationsverfahren, vom Katalysator gereinigt und gegebenenfalls von gebildeten Salzen, beispielsweise durch Filtration, befreit.

Die erfindungsgemäße Behandlung der so hergestellten und gereinigten Polyetherpolyole ist eine Kombination aus einem thermischreaktiven Schritt bei einem pH-Wert von kleiner als 7 und einer Temperatur von größer als 60°C und einem thermisch-destillativen Schritt in einer Gegenstromkolonne unter Verwendung eines Reinigungsmittels.

Im thermisch-reaktiven Behandlungsschritt wird der pH-Wert auf kleiner als 7, vorzugsweise auf kleiner als 6 und insbesondere bevorzugt auf kleiner als 5,5, durch Zugabe von Säuren und/oder sauren Substanzen abgesenkt. Als Säuren und/oder sauren Substanzen werden beispielsweise Ameisensäure, Essigsäure, Phosphorsäure, Schwefelsäure, Salzsäure oder Oxalsäure eingesetzt. Insbesondere bevorzugt werden Phosphorsäure und Salzsäure. Vorteilhafterweise wird die bei der Reinigung des jeweiligen Rohpolyetherols vom basischen Katalysator verwendete Säure verwendet.

Der thermisch-reaktive Behandlungsschritt kann im Beisein von Sorptionsmitteln, insbesondere sauer reagierenden Sorptionsmitteln, durchgeführt werden. Als Sorptionsmittel kommen dafür beispielsweise die oben aufgeführten Säuren in Frage.

Die Reaktion erfolgt erfindungsgemäß bei einer Temperatur von größer als 60°C, vorzugsweise bei Temperaturen von größer als 90°C besonders bevorzugt bei Temperaturen von größer als 100°C.

Durch diesen thermisch-reaktiven Behandlungsschritt werden Umlagerungen der gebildeten Nebenprodukte zu geruchsintensiveren und höhersiedenden (und damit infolge geringer Flüchtigkeit zunächst im PUR verbleibenden und nach und nach störenden Geruch und Fogging-Effekte verursachenden) Substanzen vermieden bzw. schon im Hochsiedebereich befindliche Substanzen gespalten.

Direkt daran schließt sich der spezielle thermisch-destillativen Behandlungsschritt an, der in einer Gegenstromkolonne unter Verwendung eines Reinigungsmittels durchgeführt wird.

Die erfindungsgemäß einzusetzende Kolonne arbeitet im Gegenstrom mit einem Reinigungsmittel, vorzugsweise bei Gasgeschwindigkeiten von 0,1 bis 2 m/s und einer Flussigkeitsbelastung von 1 bis 10 m³/ (m²·h). Die Kolonne weist eine spezifische Oberfläche von 300 bis 1000 m²/m³ auf.

Es werden flüssige und/oder gasförmige Reinigungsmittel mit einem hohen Unlöslichkeitsgrad im Polyetherpolyol und einem hohen Dampfdruck bei der Betriebstemperatur der Kolonne während des Behandlungsschrittes verwendet. Insbesondere kommen Stickstoff und/oder CO₂ in Frage. Vorzugsweise wird das Reinigungsmittel über eine Düse in das Vakuum entspannt. Vorteilhafterweise ist die Düse so gestaltet, daß eine gute sofortige Verteilung des Reinigungsmittels über den gesamten Querschnitt der Kolonne gewährleistet wird.

Die Behandlung kann kontinuierlich oder diskontinuierlich betrieben werden und wird vorzugsweise bei Temperaturen von 100 bis 150°C, einem Druck am Kolonnenkopf von 1 bis 50 mbar und einem Druckverlust über die Kolonne von weniger als 1 mbar durchgeführt.

Die kombinierte Nachbehandlung wird insbesondere nach der Reinigung des Rohpolyetherols vom Katalysator, vor oder nach einer Filtration zur Entfernung fester Bestandteile, durchgeführt. Erfolgt sie vor der üblichen Abtrennung der Salze, schließt sich gegebenenfalls nochmals eine Filtration an.

Die erfindungsgemäße kombinierte Behandlung kann gegebenenfalls durch eine extraktive bzw. sorptive Behandlung mit festen Sorptionsmitteln bzw. mit Extraktionsmitteln ergänzt werden.

Das erfindungsgemäße Verfahren hat den Vorteil, daß durch die spezielle thermisch-reaktive und thermisch-destillative Behandlung der Polyetherpolyole neben den üblichen entfernbaren Nebenprodukten auch sehr hochsiedende Bestandteile, wie beispielsweise cyclische Acetale, Aldehyde, Ketone und/oder deren Derivate, während ihrer Bildung und/oder Umlagerung teils gespalten, teils zu niedersiedenden Verbindungen umgelagert und dann günstig entfernt werden können. Die destillative Behandlund wird in einer sehr einfachen Kolonne durchgeführt, aber durch die kombiniert angewendete reaktive Behandlung und die genau auf die dabei entstehenden Spalt- und Umlagerungsprodukte ausgerichteten Betriebsbedingungen der Kolonne ist eine Abreicherungsrate von > 95 % möglich und es entstehen im wesentlichen fogging- und geruchsfreie Polyetherpolyole, die zu fogging- und geruchsarmen PUR-Schäumen umgesetzt werden können. Produktverfärbungen und Produktschädigungen treten bei dem erfindungsgemäßen Verfahren nicht auf. Das Verfahren ist auf alle Polyetherpolyolsorten anwendbar.

Die Herstellung der fogging- und geruchsarmen PUR-Schäume erfolgt in üblicher Weise durch Umsetzung der erfindungsgemäß behandelten Polyetherpolyole, gegebenenfalls im Gemisch mit weiteren höhermolekularen Verbindungen mit mindestens zwei reaktiven Wasserstoffatomen, mit organischen und/oder modifizierten organischen Polyisocyanaten und gegebenenfalls niedermolekularen Kettenverlängerungs- und/oder Vernetzungsmitteln in Gegenwart von Treibmitteln, Katalysatoren sowie gegebenenfalls weiteren Hilfsmitteln und/oder Zusatzstoffen.

Eine zusammenfassende Übersicht über einsetzbare Ausgangsstoffe sowie die Herstellung und Verwendung von PUR-Schaumstoffen ist der Fachliteratur, beispielsweise der Monographie von J. H. Saunders und K. C. Frisch "High Polymers", Band XVI, Polyurethanes, Teil 1 und 2, Verlag Interscience Publishers, 1962 bzw. 1964 oder dem Kunststoffhandbuch, Polyurethane, BandVII, Carl-Hanser-Verlag, München, Wien, 1., 2. und 3. Auflage, 1966, 1983 bzw. 1993, oder entsprechenden Patentschriften zu entnehmen.

Die Erfindung wird in den nachfolgenden Ausführungsbeispielen näher erläutert:

### Vergleichsbeispiel 1

1000 kg eines Polyetherpolyols, hergestellt aus 23 kg Glycerin, 882 kg PO und 95 kg EO, mit einer OH-Zahl von 50 mg KOH/g, einer Gesamtalkalität von 0,3 % KOH, einer Viskosität von 600 mPas und einem Gehalt an qualitätsbeeinflussenden Nebenprodukten von 400 ppm wurden einer üblichen Reinigung mit H₃PO₄ (Zugabe von 2 Gew.-% H₂O und 5,25 kg H₃PO₄, Destillation über 0,5 h bei 80°C und Filtration zur Wasser- und Salzentfernung über einen Kurzwegverdampfer unter Stickstoff bei 110°C) unterzogen.

Das so gereinigte Polyetherpolyol hatte noch 348 ppm Nebenprodukte und wies einen sehr starken Geruch auf. Daraus hergestellte PUR-Weichschaumstoffe verursachten Fogging und einen starken Geruch, der sich auch nach Lagerung nicht verbesserte.

### Ausführungsbeispiel 1

1000 kg eines Polyetherpolyols gemäß Vergleichsbeispiel 1 wurden im Anschluß an die beschriebene Destillation und Filtration nochmals mit 0,25 kg H₃PO₄ versetzt. Das Produkt mit einem pH-Wert von 5,7 wurde auf 125°C erhitzt und 1 h gerührt. Danach wurde das Polyetherpolyol in einer Kolonne mit folgenden Parametern destillativ behandelt:
- spezifische Oberfläche: 500 m²/m³
- Temperatur: 100 -150°C
- Druck: 25 mbar
- Druckverlust: < 1 mbar
- Reinigungsmittel: N₂
- Gasgeschwindigkeit: 1,2 m/s
- Flüssigkeitsbelastung: 8 m³/(m²·h)

Das Polyetherpolyol wies nach der Behandlung 15 ppm Nebenprodukte auf, war farblos und hatte einen angenehmen produkttypischen Geruch. Es hatten sich keine zusätzlichen Nebenprodukte gebildet.

### Vergleichsbeispiel 2

1000 kg eines Polyetherpolyols, hergestellt aus 23 kg Glycerin, 882 kg PO und 95 kg EO, mit einer OH-Zahl von 50 mg KOH/g, einer Gesamtalkalität von 0,3 % KOH, einer Viskosität von 600 mPas und einem Gehalt an qualitätsbeeinflussenden Nebenprodukten von 400 ppm wurden einer üblichen Reinigung mit HCl (Zugabe von 2 Gew.-% H₂O und 6,8 kg HCl, Destillation über 0,5 h bei 80°C und Filtration zur Wasser- und Salzentfernung über einen Kurzwegverdampfer unter Stickstoff bei 110°C) unterzogen.

Das so gereinigte Polyetherpolyol hatte noch 300 ppm Nebenprodukte und wies einen sehr starken Geruch auf. Daraus hergestellte PUR-Weichschaumstoffe verursachten Fogging und einen starken Geruch, der sich auch nach Lagerung nicht verbesserte.

### Ausführungsbeispiel 2

1000 kg eines Polyetherpolyols gemäß Vergleichsbeispiel 2 wurden im Anschluß an die beschriebene Destillation und Filtration nochmals mit 0,6 kg HCl versetzt. Das Produkt mit einem pH-Wert von 3,8 wurde auf 125°C erhitzt und 1 h gerührt. Danach wurde das Polyetherpolyol in einer Kolonne mit folgenden Parametern destillativ behandelt:
- spezifische Oberfläche: 500 m²/m³
- Temperatur: 100 -150°C
- Druck: 25 mbar
- Druckverlust: < 1 mbar
- Reinigungsmittel: N₂
- Gasgeschwindigkeit: 1,2 m/s
- Flüssigkeitsbelastung: 8 m²/(m³·h)

Das Polyetherpolyol wies nach der Behandlung 8 ppm Nebenprodukte auf, war farblos und hatte einen angenehmen produkttypischen Geruch. Es hatten sich keine zusätzlichen Nebenprodukte gebildet.

### Vergleichsbeispiel 3

1000 kg eines Polyetherpolyols, hergestellt aus 23 kg Glycerin und 977 kg PO, mit einer OH-Zahl von 35 mg KOH/g, einer Gesamtalkalität von 0,2 % KOH, einer Viskosität von 3 200 mPas und einem Gehalt an qualitätsbeeinflussenden Nebenprodukten von 800 ppm wurden einer üblichen Reinigung mit H₂SO₄ (Zugabe von 2 Gew.-% H₂O und 2,2 kg H₂SO₄, Destillation über 0,5 h bei 80°C und Filtration zur Wasser- und Salzentfernung über einen Kurzwegverdampfer unter Stickstoff bei 110°C) unterzogen.

Das so gereinigte Polyetherpolyol hatte noch 450 ppm Nebenprodukte und wies einen sehr starken Geruch auf. Daraus hergestellte PUR-Weichschaumstoffe verursachten Fogging und einen starken Geruch, der sich auch nach Lagerung nicht verbesserte.

### Ausführungsbeispiel 3

1000 kg eines Polyetherpolyols gemäß Vergleichsbeispiel 3 wurden im Anschluß an die beschriebene Destillation und Filtration nochmals mit 0,2 kg H₂SO₄ versetzt. Das Produkt mit einem pH-Wert von 4,2 wurde auf 125°C erhitzt und 1 h gerührt. Danach wurde das Polyetherpolyol in einer Kolonne mit folgenden Parametern destillativ behandelt:
- spezifische Oberfläche: 500 m²/m³
- Temperatur: 100 -150°C
- Druck: 25 mbar
- Druckverlust: < 1 mbar
- Reinigungsmittel: N₂
- Gasgeschwindigkeit: 1,2 m/s
- Flüssigkeitsbelastung: 8 m²/(m³·h)

Das Polyetherpolyol wies nach der Behandlung 15 ppm Nebenprodukte auf, war farblos und hatte einen angenehmen produkttypischen Geruch. Es hatten sich keine zusätzlichen Nebenprodukte gebildet.

## Patentansprüche

1. Verfahren zur Behandlung von Polyetherpolyolen, die auf übliche Weise durch basisch katalysierte Umsetzung von H-funktionellen Startsubstanzen mit Alkylenoxiden hergestellt und vom Katalysator und gegebenenfalls von gebildeten Salzen gereinigt wurden, dadurch gekennzeichnet, daß die Behandlung eine Kombination aus einem thermisch-reaktiven Schritt bei einem pH-Wert von kleiner als 7 und einer Temperatur von größer als 60°C und einem thermisch-destillativen Schritt in einer Gegenstromkolonne unter Verwendung eines Reinigungsmittels ist.

2. Verfahren nach Anspruch 1, dadurch gekennzeichnet, daß der thermisch-reaktive Behandlungsschritt bei einem pH-Wert von kleiner als 6 durchgeführt wird.

3. Verfahren nach Anspruch 1 oder 2, dadurch gekennzeichnet, daß die Absenkung des pH-Wertes durch Zugabe von Säuren und/oder sauren Substanzen erfolgt.

4. Verfahren nach einem der Ansprüche 1 bis 3, dadurch gekennzeichnet, daß der thermisch-reaktive Behandlungsschritt im Beisein von sauer reagierenden Sorptionsmitteln durchgeführt wird.

5. Verfahren nach einem der Ansprüche 1 bis 4, dadurch gekennzeichnet, daß in dem thermisch-reaktiven Behandlungsschritt eine Erhöhung der Temperatur auf mehr als 90°C erfolgt.

6. Verfahren nach einem der Ansprüche 1 bis 5, dadurch gekennzeichnet, daß der thermisch-destillative Behandlungsschritt in einer Kolonne im Gegenstrom mit einem Reinigungsmittel bei Gasgeschwindigkeiten von 0,1 bis 2 m/s und einer Flüssigkeitsbelastung von 1 bis 10 m³/(m²·h) durchgeführt wird.

7. Verfahren nach einem der Ansprüche 1 bis 6, dadurch gekennzeichnet, daß flüssige und/oder gasförmige Reinigungsmittel mit hohem Unlöslichkeitsgrad im Polyetherpolyol und einem hohen Dampfdruck bei der Betriebstemperatur der Kolonne während des Behandlungsschrittes verwendet werden.

8. Verfahren nach einem der Ansprüche 1 bis 7, dadurch gekennzeichnet, daß als Reinigungsmittel Stickstoff und/oder CO₂ verwendet werden.

9. Verfahren nach einem der Ansprüche 1 bis 8, dadurch gekennzeichnet, daß die thermisch-destillative Behandlung in einer Kolonne mit einer spezifischen Oberfläche von 300 bis 1000 m²/m³ bei Temperaturen von 100 bis 150°C, einem Druck am Kolonnenkopf von 1 bis 50 mbar und einem Druckverlust über die Kolonne von weniger als 1 mbar durchgeführt wird.

10. Verwendung der nach einem der Ansprüche 1 bis 9 hergestellten Polyetherpolyole zur Herstellung von fogging- und geruchsarmen Polyurethanschäumen.
